## Europäisches Patentamt

## European Patent Office

## Office européen des brevets

(11) Veröffentlichungsnummer: **0 010 186 B1**

(12) **EUROPÄISCHE PATENTSCHRIFT**

(45) Veröffentlichungstag der Patentschrift:
20.01.82

(21) Anmeldenummer: 79103599.1

(22) Anmeldetag: 24.09.79

(51) Int. Cl.³: **G 06 F 13/00**

(54) Vorrichtung zum Bearbeiten bezeichneter Hinweise.

(30) Priorität: 23.10.78 US 953666

(43) Veröffentlichungstag der Anmeldung:
30.04.80 Patentblatt 80/9

(45) Bekanntmachung des Hinweises auf die Patenterteilung:
20.01.82 Patentblatt 82/3

(84) Benannte Vertragsstaaten:
**DE FR GB**

(56) Entgegenhaltungen:
**US-A-3 611 310**
**AFIPS CONFERENCE PROCEEDINGS 35,**
**Fall Joint Computer Conference**
**1969,**
**New York, US,**
**LAMPSON: «Dynamic protection**
**structures», Seiten 27 bis 38.**

**IBM TECHNICAL DISCLOSURE BULLETIN,**
**Band 17, Nr. 7, Dezember 1974,**
**New York, US,**
**ATTANASIO: «Tagged main storage**
**for control functions»,**
**Seiten 2158–2159.**

(73) Patentinhaber: **International Business Machines**
**Corporation, Armonk, N.Y. 10504 (US)**

(72) Erfinder: **Mitchell, Glen Robert, RR 1, Pine Island,**
**Minnesota 55963 (US)**
Erfinder: **Kempke, William George, 919 NW 20 Street,**
**Rochester, Minnesota 55901 (US)**
Erfinder: **Jones, Eugene Reese, 518 SW 18 Street,**
**Rochester, Minnesota 55901 (US)**
Erfinder: **Houdek, Merle Edward, 4121 NW 3 Street,**
**Rochester, Minnesota 55901 (US)**
Erfinder: **Ranweiler, James Gregory, 2417 NW 12 Avenue,**
**Rochester, Minnesota 55901 (US)**

(74) Vertreter: **Möhlen, Wolfgang C., Dipl.-Ing.,**
**Säumerstrasse 4, CH-8803 Rüschlikon (CH)**

(56) Entgegenhaltungen:
**IEEE TRANSACTIONS ON COMPUTERS,**
**Band C-22, Nr. 7, Juli 1973,**
**New York, US,**
**FEUSTEL: «On the advantages of**
**tagged architecture», Seiten 644–656.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Vorrichtung zum Bearbeiten bezeichneter Hinweise

Technisches Gebiet

Die vorliegende Erfindung, die in Computersystemen verwendet wird, bezieht sich speziell auf Geräte, bei denen bezeichnete Hinweise im Speicher mit Daten vermischt werden, und insbesondere bei denen solche Geräte die Möglichkeit vorsehen, die Hinweise zu überprüfen, um ihre Gültigkeit festzustellen und die Bezeichnungen unter Programmeinfluss abzuändern. Die Erfindung wird insbesondere in Computersystemen verwendet, in welchen auf die Unverletzlichkeit von Daten und Hinweisen grosser Wert gelegt wird.

Stand der Technik

Der Schutz des Inhalts des Computerhauptspeichers ist sehr wichtig, und zahlreiche Vorkehrungen wurden schon getroffen, um zu verhüten, dass gespeicherte Information zerstört wird. Wenn mehrere Programme im Hauptspeicher stehen, ist dieser Schutz besonders wichtig. Die Forderung der guten Speicherausnützung verbietet es, eine abgegrenzte Zone innerhalb des Speichers zu schützen, weil der Speicherinhalt im allgemeinen während des Programmablaufs umgeformt wird.

Im Stand der Technik ist es üblich, dass ein Überwachungsprogramm die Bereiche des Speichers, die von anderen Programmen geändert werden können, überprüft. In einer Form der Speicherüberprüfung benützt das Überwachungsprogramm ein Register, das die Grenzen des gegenwärtig laufenden Programmes festhält. Jede neue Adresse wird mit dem Inhalt dieses Programmgrenzregisters verglichen und zugelassen, wenn sie sich innerhalb der Programmgrenzen befindet oder unterdrückt, wenn sie ausserhalb ist.

An Stelle der Verwendung des Programmgrenzregisters ist es auch möglich, den Speicher in kleine feste Blöcke zu unterteilen und jedem Block eine Schutzbezeichnung zuzuordnen. Die Bezeichnungszuordnungen stehen in einem Speicher, der nur vom Überwachungsprogramm geändert werden kann. Jede Verarbeitungseinheit oder jeder Kanal umfasst ein Schutzschlüsselregister, dessen Inhalt die Bezeichnung für den Speicherzugriff angibt. Der Schutzschlüssel kann nur vom Überwachungsprogramm geändert werden und zwar dann, wenn die Verarbeitung von einem Programm auf ein anderes übergeht. Bei jedem Speicherzugriff wird der Schutzschlüssel auf Übereinstimmung mit der Speicherbezeichnung geprüft. Geht die Prüfung nicht auf, dann wird der Zugriff unterdrückt. Die Methode mit Schlüssel und Bezeichnung ist aufwendiger als die Methode mit dem Programmgrenzregister, hat jedoch den Vorteil, den geschützten Anteil des Speichers nicht auf einen festgesetzten Bereich zu beschränken.

Bei der Benützung von Bezeichnungen ist es möglich, dass ein Programm nicht zusammenhängede Räume im Speicher belegt und Segmente bildet, die bei dynamischer Speicherbewirtschaftung neu angeordnet werden können. Dies gestattet es, jedes Wort und nicht nur einen Block im Hauptspeicher zu bezeichnen, und es erleichtert die gemischte Speicherung von Daten und Hinweisen im gleichen Speicher und damit die Bewirtschaftung.

Aus dem Artikel «Tagged Main Storage for Control Functions» von C.R. Attanasio, erschienen im IBM Technical Disclosure Bulletin, Vol. 17, No. 7, Dezember 1974, Seiten 2158 und 2159, ist es bekannt, im Hauptspeicher einer Datenverarbeitungsanlage für jeden Abschnitt (z.B. für jedes Doppelwort) ein Bezeichnungsbit vorzusehen. Durch den jeweiligen Binärwert dieses Bits kann man angeben, welche Datenart in dem betreffenden Abschnitt gespeichert ist. Auf diese Weise kann man erreichen, dass zu einzelnen Abschnitten mit Systemsteuerdaten nur privilegierte Instruktionen Zugriff haben. Die Bezeichnungsbits selbst sind nicht direkt adressierbar, werden aber bei Speicherzugriffen jeweils durch Schaltkreiseinrichtungen geprüft.

Diese Anordnung ist brauchbar zum Schutz von speziellen Daten oder Angaben, die separat in einzelnen Speicherabschnitten, beispielsweise Doppelwörtern, stehen. Manche Angaben, z.B. Hinweise, sind aber so lang, dass sie über mehrere Abschnitte verteilt gespeichert werden müssen. Um sie zu lesen oder zu speichern, sind mehrere Teilzugriffe nötig. Es ist dann notwendig, dass alle Teilabschnitte eine Bezeichnung erhalten, damit man nicht einzelne von ihnen unerwünscht benutzen kann. Zur Feststellung bzw. Bearbeitung der Gesamtbezeichnung solcher verteilt gespeicherten Angaben wären aber zusätzliche Operationen nötig, welche die Teil-Prüfergebnisse aufbewahren und dann kombinieren.

Es wäre wünschenswert, den gesamten Bezeichnungszustand solcher in mehreren Plätzen oder Abschnitten gespeicherter Angaben trotz mehreren erforderlicher Teilzugriffe ohne zusätzliche Operationen, d.h. ohne zusätzlichen Zeitaufwand, zu bestimmen. Hierzu bietet die Erfindung eine Lösung.

Vorteile der Erfindung

Mit der Ausführung eines Programmes ist stets ein Speicheranteil verbunden, in dem das Programm Variable speichern oder verändern kann. Dieser Speicheranteil kann als Raum bezeichnet werden und die Variabeln innerhalb des Raums als Hinweise und Daten. Ein Hinweis besteht aus vier Wörtern zu sechzehn Bytes im Speicher und umfasst unter anderem eine Sechs-Byte-Adresse, die auf ein bestimmtes Byte oder eine Anzahl von Bytes hinweist. Zur wirksamen Arbeitsweise, insbesondere bei zahlreichen Zugriffen auf Plattenspeicher, wodurch Daten und Hinweise zum und vom Hauptspeicher übertragen werden, ist es wünschenswert Daten und Hinweise im selben Raum zu mischen. Da jedoch ein Hinweis in einem Raum benützt werden kann zum Zugriff auf Bytes in einem anderen Raum, muss die Zulässigkeit solcher Zugriffe, d.h. die Gültigkeit der Hinweise überprüft werden, um zu vermeiden, dass zufällig oder unzulässig auf Daten zugegriffen wird.

Die vorliegende Erfindung sieht eine Bezeichnungsposition für jedes Wort im Hauptspeicher vor. Mittels der Bezeichnung können unzulässige Änderungen an Hinweisen entdeckt werden. Ein Hinweis gilt als bezeichnet wenn alle vier Bezeichnungsbits des Vierfachwortes gesetzt sind und als unbezeichnet wenn eines der vier Bezeichnungsbits nicht gesetzt ist. Nur die Bezeichnungsinstruktion kann die Bezeichnungsbits im Hauptspeicher setzen, alle anderen Instruktionen speichern Daten und löschen die zugehörigen Bezeichnungsbits. Wird daher ein Hinweis versehentlich geändert durch eine dieser Instruktionen, dann wird der Umstand, dass der Hinweis nicht bezeichnet ist, entdeckt, wenn der Hinweis durch die Lade- und Bezeichnungsüberprüfinstruktion benützt wird. Der Inhalt dieses Hinweises wird dann als ungültig angesehen.

Die Erfindung sieht eine Vorrichtung vor, die die Möglichkeit hat, bezeichnete Hinweise auf ihre Gültigkeit zu überprüfen, und Instruktionen, um die Bezeichnungen zu laden, zu speichern, zu setzen, zu verschieben und abzulesen. Eine Instruktion «Load and Verify Tags» wird benützt, um die Gültigkeit eines bezeichneten Hinweises festzustellen und den Hinweis in ein bestimmtes Register zu laden. Eine Instruktion «Store and Set Tags» speichert den in einem bestimmten Register stehenden Wert im Hauptspeicher und setzt die Bezeichnungsbits für das entsprechende Vierfachwort. Der Wert im bezeichneten Register wird in den Hauptspeicher über das Speicherdatenregister übertragen, das eine Bezeichnungsbitposition hat. Die «Move and Set Tags» Instruktion verschiebt ein Vierfachwort von einer Stelle im Hauptspeicher Wort für Wort über das Speicherdatenregister zu derselben oder einer anderen Stelle im Hauptspeicher. Die Bezeichnungsbits werden über das Speicherdatenregister erzeugt, wenn die Bewegung stattfindet. Eine «Move Characters and Tags» Instruktion benützt das Speicherdatenregister, um ein Wort von einer Speicherstelle an eine andere zu verschieben. Die Instruktion erzeugt auch die Signale, um das Bezeichnungsbit durch das Speicherdatenregister und zurück in den Speicher zu verschieben.

Eine «Extract Tags» Instruktion holt jedes Wort und das zugehörige Bezeichnungsbit eines Operanden im Hauptspeicher und überträgt die Bezeichnungsbits in ein Bezeichnungsprüfregister. Nachdem jedes einzelne Wort eines Vierfachwortes gelesen wurde, wird die UND-Verknüpfung der vier Bezeichnungsbits in das Bezeichnungsschieberegister gesetzt. Wenn alle Vierfachworte geholt und alle Bezeichnungen im Bezeichnungsschieberegister gesetzt sind, werden die Bezeichnungen so weit nach links verschoben, dass das äusserst linke Bezeichnungsbit im Schieberegister dem ersten Vierfachwort des Operanden entspricht. Der Inhalt des Bezeichnungsschieberegisters wird dann über das Speicherdatenregister im Hauptspeicher abgespeichert.

Die im Hauptspeicher gespeicherten Bezeichnungsbits werden aufgrund der «Insert Tags» Instruktion in das Speicherdatenregister geholt und auf das Bezeichnungsschieberegister übertragen. Das äusserst links stehende Bit des Bezeichnungsschieberegisters enthält die Bezeichnungen für das erste Vierfachwort des Operanden, dem Bezeichnungsbits zuzufügen sind. Vierfachworte werden Wort für Wort geholt und mit den zugehörigen Bezeichnungsbits vom Bezeichnungsschieberegister gespeichert.

Ein Hauptziel der Erfindung liegt darin, eine Vorrichtung vorzusehen, die die bezeichneten Hinweise überprüft und feststellt, ob sie gültig sind. Die Lösung dieses Problems ist im Anspruch 1 gekennzeichnet. Ein weiteres Ziel der Erfindung ist eine Vorrichtung um Bezeichnungen in Verbindung mit entsprechenden Operationen an Daten zu speichern, zu setzen, zu verschieben, auszulesen und zuzuordnen. Diese Bezeichnungsoperationen sollen durchführbar sein, ohne dass die Leistungsfähigkeit anderer Operationen oder Instruktionen beeinflusst werden. Lösungen hierfür sind in den Unteransprüchen gekennzeichnet.

Nachfolgend sollen Ausführungsbeispiele der Erfindung anhand der Zeichnungen im einzelnen beschrieben werden.

Die Zeichnungen

Fig. 1 ist ein Blockschaltbild, das die Verbindung der Bezeichnungsbearbeitungsvorrichtung mit dem unter Mikroprogramm arbeitenden Prozessor zeigt.

Fig. 2 ist ein Blockschaltbild der Bezeichnungsschnittstellenschaltung.

Fig. 3 ist ein vereinfachtes Blockschaltbild zur Darlegung der Bezeichnungsbearbeitung.

Detailbeschreibung

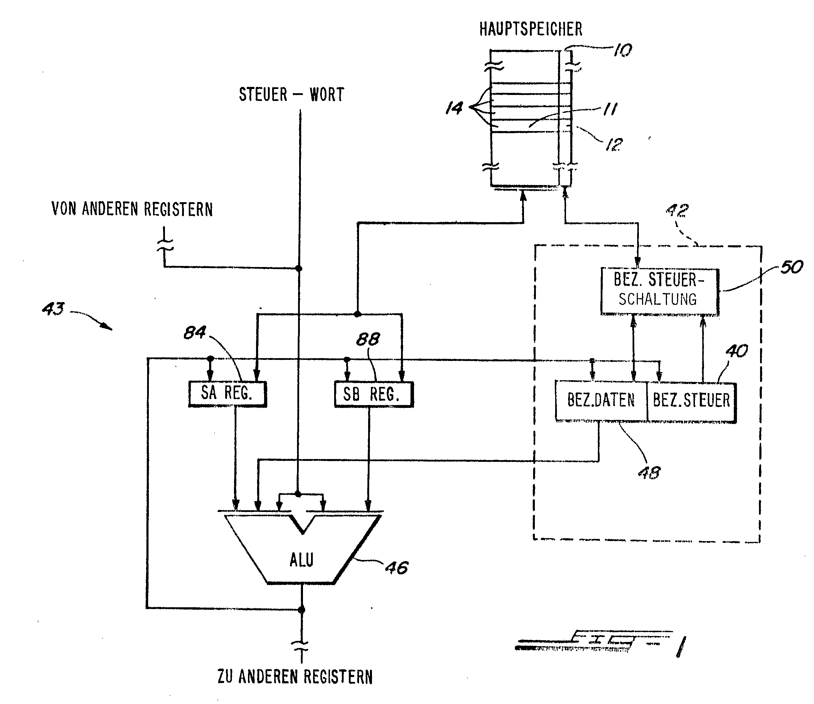

In Fig. 1 ist ein Computersystem mit gespeichertem Programm gezeigt, das einen Hauptspeicher 10 aufweist, der in adressierbare Abschnitte oder Wörter 11 eingeteilt ist. Jedes Wort weist eine Bezeichnungsbitposition 12 auf. Ein Hinweis 14 ist ein Vierfachwort, d.h. vier Worte, total sechzehn Bytes, im Speicher. Es gilt als bezeichnet, wenn alle vier Bezeichnungsbits 12 gesetzt sind und als unbezeichnet, wenn ein oder mehr Bezeichnungsbits gelöscht sind.

Die Instruktionen zum Laden, Speichern, Setzen, Verschieben, Entnehmen und Einsetzen von Bezeichnungen im Zusammenhang mit an den Daten auszuführenden Operationen sind in horizontalem Mikrocode implementiert. Eine Schnittstelle ist vorgesehen für die Übertragung der Bezeichnungsbits 12 zum und vom Hauptspeicher 10. Fig. 1 zeigt die Verbindungen zwischen der Bezeichnungsschnittstellenschaltung 42, dem Hauptspeicher 10 und der Mikrocodeverarbeitungseinheit 43. Daten vom Steuerwort werden durch ein Rechenwerk (ALU) 46 dem Bezeichnungssteuerregister 40 und dem Bezeichnungsdatenregister 48 gleichzeitig zugeführt. Dies ermöglicht, dass ein Mikrocodesteuerwort jeden Bezeichnungssteuerzustand im Bezeichnungssteuerregister 40 erzeugen kann. Sind die Bezeichnungsbits 12 für ein Wort 11 im Hauptspeicher 10 zu
setzen, so wird das Bezeichnungsdatenregister 48
gesetzt.

Die Bits des Bezeichnungsdatenregisters 48
können auch gesetzt werden, indem ein Wort 11
mit gesetztem Bezeichnungsbit 12 vom Hauptspeicher 10 geholt wird. Die Bezeichnungsbits 12
vom Hauptspeicher 10 gelangen durch die Bezeichnungssteuerschaltung 50 unter Steuerung
des Registers 40 in das Bezeichnungsdatenregister 48, wenn ein entsprechendes Kommando die
Daten vom Hauptspeicher 10 in das SA-Register
84 und SB-Register 88 überträgt. Wenn andererseits ein Wort vom SA-Register 84 oder SB-Register 88 in den Hauptspeicher 10 übertragen wird,
wird Information vom Bezeichnungsdatenregister
48 unter der Steuerung des Bezeichnungssteuerregisters 40 durch die Bezeichnungssteuerschaltung 50 in die Bezeichnungsbitstelle 12 im Hauptspeicher übertragen.

Der Inhalt des Bezeichnungsdatenregisters 48
wird ebenfalls auf das Rechenwerk 46 übertragen,
wobei das Bezeichnungsbit entweder in ein anderes Register weitergegeben wird oder mit Daten
vom Steuerwort verglichen wird, um ein externes
Signal zu erzeugen.

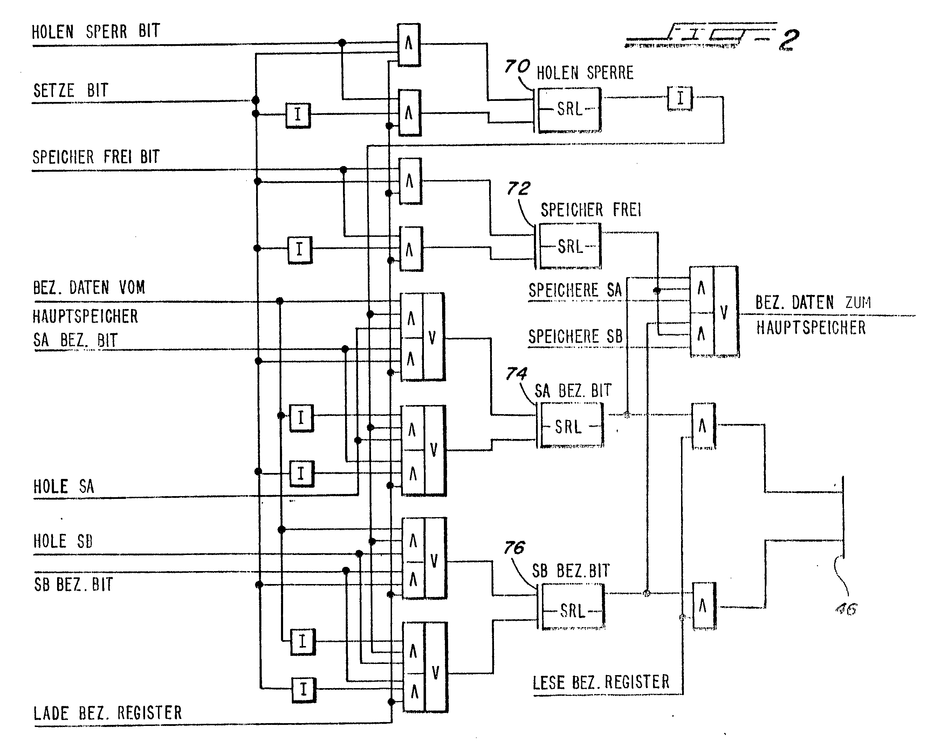

Fig. 2 zeigt die Einzelheiten der Bezeichnungsschnittstellenschaltung 42. Haltekreise 70, 72 und
Haltekreise 74, 76 entsprechen dem Bezeichnungssteuerregister 40 und dem Bezeichnungsdatenregister 48 der Fig. 1. Das Holensperrbit, das
Speicherfreibit, das SA-Bezeichnungsbit und SB-
Bezeichnungsbit setzen oder löschen die Haltekreise 70, 72, 74 und 76. Wenn das Setzebit vom
Rechenwerk 46 aktiviert ist, werden die Haltekreise 70, 72, 74, 76 vom Bezeichnungsregisterladesignal des Steuerwortes selektiv gesetzt. Wenn
das Setzebit vom Rechenwerk 46 inaktiv ist, werden die Kreise 70, 72, 74 und 76 vom Bezeichnungsregisterladesignal selektiv gelöscht. Ein
Haltekreis kann also gesetzt oder gelöscht werden, während ein anderer in seinem Zustand verbleibt. Die SA- und SB-Bezeichnungsbits der Kreise 74 und 76 gelangen in die ALU-Busleitung
durch das Bezeichnungsregisterlesesignal des
Steuerwortes. Die Bezeichnungsbits gelangen also zum Rechenwerk 46 zur Übertragung auf andere Register oder zur Prüfung mittels Daten des
Steuerwortes.

Der Holensperrkreis 70 steuert das Holen von
Bezeichnungsbits 12, wenn ein Wort 11 vom
Hauptspeicher 10 geholt wird. Wenn ein Wort 11
vom Hauptspeicher 10 geholt und in das SA-Register 84 gesetzt wird, wird das zugehörige Bezeichnungsbit 12 in den SA-Bezeichnungsbitkreis 74
gesetzt durch das Hole-SA-Signal des Steuerwortes, sofern die Holensperre 70 gelöscht ist. Wenn
andererseits Daten vom Hauptspeicher geholt und
in das SB-Register 88 gesetzt werden, wird das
zugehörige Bezeichnungsbit 12 durch das Holen-
SB- Signal des Steuerwortes in den SB-Bezeichnungsbitkreis 76 gesetzt, sofern die Holensperre
70 gelöscht ist. Ist die Holensperre 70 gesetzt, so
kann das Ausgangssignal vom Hauptspeicher 10 den SA-Bezeichnungsbitkreis 74 oder SB-Bezeichnungsbitkreis 76 nicht setzen.

Ist ein Wort, das im SA-Register 84 steht, im
Hauptspeicher 10 zu speichern, so wird der Ausgang des SA-Bezeichnungsbitkreises 74 dem
Hauptspeicher 10 durch das Speicher-SA-Signal
des Steuerwortes zugeleitet, wenn der Speicherfreikreis 72 gesetzt ist. Wenn andererseits ein
Wort, das im SB-Register 88 steht, im Hauptspeicher 10 gespeichert werden soll, wo wird durch
das Speicher-SB-Signal des Steuerwortes der
Ausgang des SB-Bezeichnungskreises 76 dem
Hauptspeicher 10 zugeleitet, sofern der Speicherfreikreis 72 gesetzt ist. Ist der Speicherfreikreis 72
gelöscht, so wird der Ausgang des SA-Bezeichnungsbitkreises 74 und des SB-Bezeichnungsbitkreises 76 dem Hauptspeicher 10 nicht zugeleitet,
und der Speicherfreikreis 12 ist gelöscht. Der Speicherfreikreis 72 steuert somit die Speicherung der
Bezeichnungsbits 12, wenn Wörter 11 vom SA-
Register 84 oder SB-Register 88 im Hauptspeicher
10 gespeichert werden.

Beim normalen Betrieb sind sowohl der Holensperrkreis 70 und der Speicherfreikreis 72 bei allen
Instruktionen gelöscht ausser bei gewissen Bezeichnungsinstruktionen. Diese Instruktionen setzen demzufolge nie ein Bezeichnungsbit 12.

Der Operationsablauf der meisten Instruktionen
besteht aus dem Holen der Operationen mittels
einer gemeinsamen Mikrocoderoutine und der
Verzweigung zum speziellen Mikrocode für jede
Instruktion. Bei der Ausführung der gemeinsamen
Mikrocoderoutine sind sowohl der Holensperrkreis 70 als auch der Speicherfreikreis 72 gelöscht,
wodurch die Logik in die Lage gesetzt wird, die
Bezeichnungsbits 12 zu lesen, falls die Instruktion
eine Bezeichnungsinstruktion ist. Handelt es sich
um eine Bezeichnungsinstruktion, die keine Bezeichnung speichert, oder um eine Nichtbezeichnungsinstruktion, so wird der Inhalt des Bezeichnungssteuerregisters 40 nicht geändert. Ist die
auszuführende Instruktion eine Bezeichnungsinstruktion, die die geholten Bezeichnungen ignoriert, die Bezeichnungsbits aber setzt, dann setzt
der Mikrocode alle vier Kreise 70, 72, 74, 76, ignoriert also die vom Hauptspeicher 10 geholten Bezeichnungsbits 12 und speichert ein Bezeichnungsbit 12 im Hauptspeicher 10 für jedes Wort
11. Ist die Ausführung dieser Instruktion beendigt,
so löscht der Mikrocode alle vier Kreise 70, 72, 74,
76 und setzt das Bezeichnungssteuerregister 40 in
Bereitschaft für die nächste Instruktion.

Verlangt die Instruktion die Verschiebung von
Datenwörtern 11 und Bezeichnungsbits 12 von
einer Speicherstelle zu einer anderen, so wird nur
der Speicherfreikreis 72 gesetzt, wodurch ein geholtes Bezeichnungsbit 12 an der neuen Stelle
zusammen mit dem entsprechenden Datenwort
11 gespeichert wird. Am Ende der Ausführung
dieser Instruktion löscht wiederum der Mikrocode
alle vier Kreise 70, 72, 74, 76, um sie zur Ausführung der nächsten Instruktion bereitzustellen.

Dank der zuvor beschriebenen Kombination
von Steuerkreisen 70, 72, 74, 76 und den zugehörigen Signalen kann die Bezeichnungssteuerung anfangen zu arbeiten, nachdem der Operand vollständig geholt wurde; sie kann gesetzt werden während der gesamten Ausführung der Instruktion, und dann am Ende gelöscht werden. Das erlaubt die bestmögliche Ausführung dieser Instruktionen, da die Bezeichnungssteuerung nur einmal pro Instruktion gesetzt und dann nur einmal wieder gelöscht wird. Durch die Möglichkeit, den Zustand bestimmter Kreise 70, 72, 74, 76 selektiv zu ändern, andere aber unverändert zu lassen, können weitere hier nicht gezeigte Kreise, die für andere Zwecke dienen, unverändert bleiben, wenn das Bezeichnungssteuerregister und/oder das Bezeichnungsdatenregister 48 verändert wird. Diese Möglichkeit, Kreise zu setzen oder zu löschen, ist auch vorteilhaft, wenn die Holeoperation der allgemeinen Operandholroutine noch nicht beendet ist, der Mikrocode aber bereits den Speicherfreikreis 72 setzt, ohne auf die Holeoperation des SA-Bezeichnungsbits und Kreis 74 oder des SB-Bezeichnungsbits und Kreis 76 Rücksicht zu nehmen.

Der Holensperrkreis 70 wird anstelle eines Speicherfreikreises benützt, damit das Bezeichnungssteuerregister 40 durch den Mikrocode in den Hole- und Nicht-Speicherzustand gesetzt werden kann, indem alle vier Kreise 70, 72, 74 und 76 am Ende jeder Bezeichnungsinstruktion gelöscht werden.

Die zuvor beschriebene Logik wird benützt für Bezeichnungsinstruktionen zum Prüfen, Setzen, Verschieben, Speichern, Entnehmen und Einsetzen der Bezeichnungsbits. Nur Bezeichnungsinstruktionen können die Bezeichnungsbits 12 im Hauptspeicher 10 setzen, durch alle anderen Instruktionen werden die Bezeichnungsbits gelöscht. Wurde daher ein Hinweis 14 aus Versehen durch eine dieser anderen Instruktionen geändert, dann wird der Umstand, dass der Hinweis unbezeichnet ist, festgestellt und die Werte im Hinweis als ungültig betrachtet.

Tabelle 1
Decodierung der Bezeichnungs-(TAG)-Instruktionen zu Steuersignalen.

| Instruktion | Holen Sperre | Speicher Frei | Setze bez. Bit |
|---|---|---|---|
| Lade und prüfe Bez. | Nein | Nein | Nein |
| Speichere und setze Bez. | Ja | Ja | Ja |
| Verschiebe und setze Bez. | Ja | Ja | Ja |
| Versch. Daten und Bez. | Nein | Ja | Nein |
| Lese Bez. | Nein | Nein | Nein |
| Setze Bez. | Ja | Ja | Nein |
| Nicht-Bez. Instruktion | Nein | Nein | Nein |

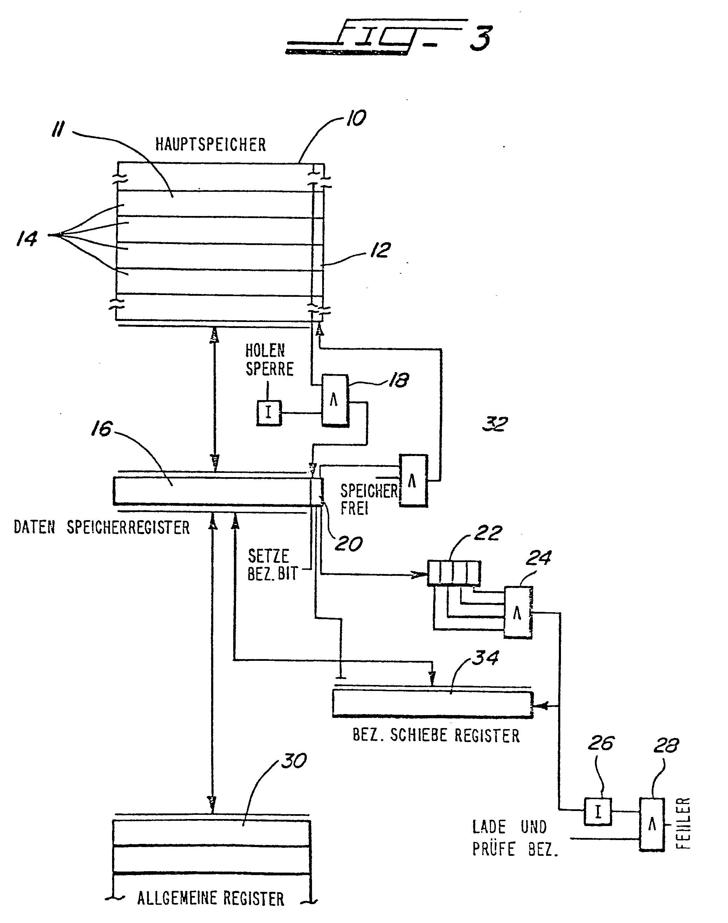

Die Tabelle 1 zeigt die Decodier- und Bezeichnungsinstruktionen und die Signalkombinationen vom Bezeichnungssteuerregister 40 und vom Bezeichnungsdatenregister 48, die benötigt werden, um die gewünschte Funktion auszuführen. Die Arbeitsbeschreibung jeder Bezeichnungsinstruktion wird nachfolgend mit Bezug auf Fig. 3 erklärt.

In Fig. 3 treten die Signale Holensperre und Speicher frei auf, die durch die Kreise 70 und 72 in Fig. 2 erzeugt werden. Das Bezeichnungsbitsetzsignal wird entweder vom SA-Bezeichnungsbitkreis 74 oder vom SB-Bezeichnungsbitkreis 46 in Fig. 2 erzeugt. Das Datenspeicherregister 16 und das Bezeichnungsschieberegister 34 entsprechen entweder dem SA-Register 84 oder dem SB-Register 88 der Fig. 1. Das Bezeichnungsbit 20 des Datenspeicherregisters 16 entspricht dem Bezeichnungsdatenregister 48 der Fig. 1. Das Bezeichnungsprüfregister 22 ist ein Schieberegister. Es entspricht einem der anderen ALU-Register der Fig. 1.

Die Lade- und Prüfinstruktion bezieht sich auf die Gültigkeit eines Hinweises 14 im Hauptspeicher 10. Ein Datenspeicherregister 16 steht mit dem Hauptspeicher 10 in Verbindung, um Wörter 11 und Bezeichnungsbits 12 zu speichern, die vom Hauptspeicher gelesen oder in denselben eingeschrieben werden. Wenn die Wörter des Hinweises 14 vom Hauptspeicher 10 in das Datenspeicherregister übertragen werden, wird das Bezeichnungsbit 12 vom Hauptspeicher an die UND-Schaltung 18 angelegt, an deren anderem Eingang das Komplement des Holensperrsignals liegt. Der Ausgang der UND-Schaltung 18 geht auf die Bezeichnungsbitposition 20 des Datenspeicherregisters 16. Das Bezeichnungsbit 20 im Datenspeicherregister 16 wird im Bezeichnungsprüfregister 22 gespeichert. Diese Operation wird wiederholt, bis alle vier Bezeichnungsbits des Hinweises 14 im Bezeichnungsprüfregister 22 gespeichert sind. Die Ausgänge des Bezeichnungsprüfregisters 22 gehen an die UND-Schaltung 24. Der Ausgang der UND-Schaltung 24 geht an den Inverter 26 und dessen Ausgang an die UND-Schaltung 28, an deren anderem Eingang das Lade- und Prüfebezeichnungsbitsignal anliegt. Wenn die vier Bezeichnungsbits im Bezeichnungsprüfregister 22 alle gesetzt sind, wird in der UND-Schaltung 28 kein Fehlersignal erzeugt. Wenn jedoch eins oder mehr Bezeichnungsbits gelöscht waren, wird ein Fehlersignal erzeugt. Ist kein Fehlersignal festgestellt worden so wird die im Hinweis festgestellte Adresse in die allgemeinen Registern 30, die in der Instruktion angegeben waren, geladen.

Die Speicher- und Setzinstruktion speichert den Wert in einem bestimmten allgemeinen Register 30 und setzt die Bezeichnungsbits 12 des entsprechenden Vierfachwortes 14. Ein Wort aus dem allgemeinen Register 30 wird auf das Datenspeicherregister 16 übertragen, wo das Bezeichnungsbitsetzsignal das Bezeichnungsbit setzt. Wenn das Wort aus dem Datenspeicherregister 16 in den Hauptspeicher 10 übertragen wird, gelangt das Bezeichnungsbit 20 an die UND-Schaltung 32, an deren anderem Eingang das Speicherfreisignal liegt. Wenn daher das Speicherfrei- und das Bezeichnungsbitsetzsignal aktiv sind, werden die Bezeichnungsbits 12 gesetzt, wenn Daten von den allgemeinen Registern 30 zum Hauptspeicher 10 über das Datenspeicherregister 16 verschoben werden.

Die Verschiebe- und Setzinstruktion schiebt ein Vierfachwort 14 von einer Stelle des Hauptspeichers 10 durch das Datenspeicherregister 16 Wort für Wort an eine neue oder dieselbe Stelle 16 im Hauptspeicher 10 und setzt die Bezeichnungsbits 12. Wenn die Wörter des Hinweises vom Hauptspeicher 10 in das Datenspeicherregister 16 gelesen werden, setzt das Setzebezeichnungsbitsignal das Bezeichnungsbit 20. Werden die Worte aus dem Datenspeicherregister 16 zurück in den Hauptspeicher 10 verschoben, dann gelangt das Bezeichnungsbit 20 an die UND-Schaltung 32, an deren anderem Eingang das Speicherfreisignal liegt. Wenn also sowohl das Speicherfreisignal und das Bezeichnungsbitsetzsignal aktiv sind, wird das Bezeichnungsbit 12 während der Verschiebungsoperation gesetzt ohne Rücksicht auf den vorherigen Zustand der Bezeichnungsbits 12 im Vierfachwort 14.

Die Instruktion «Verschiebe Daten und Bezeichnungen» schiebt ein Wort 11 und das zugehörige Bezeichnungsbit 12 von einer Speicherstelle durch das Datenspeicherregister 16 in eine neue Speicherstelle im Hauptspeicher 10. Wenn die Wörter 11 des Vierfachwortes 14 vom Hauptspeicher 10 in das Datenspeicherregister 16 gelesen werden, gelangt das Bezeichnungsbit 12 an die UND-Schaltung 18, an deren anderem Eingang das Komplement des Holensperrsignals liegt. Der Ausgang der UND-Schaltung 18 liegt an der Bezeichnungsbitposition 20 des Datenspeicherregisters 16. Wenn die Wörter vom Datenspeicherregister 16 zurück in den Hauptspeicher 10 übertragen werden, gelangt der Ausgang der Bezeichnungsbitposition 20 an die UND-Schaltung 32, an deren anderem Eingang das Speicherfreisignal liegt. Wenn daher das Speicherfreisignal aktiv ist, werden die zugehörigen Bezeichnungsbits 12 an der neuen Stelle im Hauptspeicher 10 zusammen mit den Wörtern 11 gespeichert. Das Bezeichnungsbit 12 kann gesetzt oder gelöscht sein je nach der Bedeutung des Wortes 11.

Die Bezeichnungsentnahmeinstruktion entnimmt die Bezeichnungsbits 12 von den Wörtern 11 eines Operanden variabler Länge im Hauptspeicher 10 und speichert die Bezeichnungsbits im Hauptspeicher 10 als Daten. Wenn die Wörter 11 vom Hauptspeicher 10 in das Datenspeicherregister 16 gelesen werden, wird das Bezeichnungsbit 12 an die UND-Schaltung 18 angelegt, an deren anderem Eingang das Komplement des Holensperrsignales liegt. Der Ausgang der UND-Schaltung 18 gelangt an die Bezeichnungsbitposition 20 des Datenspeicherregisters 16. Das Bezeichnungsbit 20 im Datenspeicherregister 16 gelangt an das Bezeichnungsprüfregister 22. Diese Operation wird wiederholt, bis alle vier Bezeichnungsbits des Vierfachwortes im Bezeichnungsprüfregister 22 stehen. Die Ausgänge des Bezeichnungsprüfregisters 22 gelangen an die UND-Schaltung 24, und der Ausgang der UND-Schaltung 24 gelangt an das Bezeichnungsschieberegister 34. Wenn somit die Wörter 11 vom Hauptspeicher gelesen und gespeichert werden, wird die UND-Verknüpfung der Bezeichnungbits 12 jedes Vierfachwortes 14 im Bezeichnungsschieberegister 34 voll ist, wird sein Inhalt durch das Datenspeicherreigster 16 hindurch als Daten im Hauptspeicher 10 gespeichert. Diese Operation wird wiederholt, bis alle Wörter 11 gelesen sind. Ist das Bezeichnungsschieberegister 34 nicht voll, wenn das letzte Wort 11 des Operanden gelesen wurde, so wird sein Inhalt nach links ausgerichtet, bevor er durch das Datenspeicherregister 16 im Hauptspeicher 10 gespeichert wird.

Die Bezeichnungseinsetzinstruktion liest die Bezeichnungsbits 12, die im Hauptspeicher 10 als Daten gespeichert sind, und setzt sie in die Vierfachwörter 14. Die Bezeichnungsbits, die im Hauptspeicher 10 als Daten gespeichert sind, laufen dabei durch das Datenspeicherregister 16 in das Bezeichnungsschieberegister 34. Das links äußere Bit des Bezeichnungsschieberegisters enthält dann die Bezeichnung für das erste Vierfachwort der Seite, in das Bezeichnungsbits einzusetzen sind.

Während die Wörter 11, die als Daten gespeichert sind, vom Hauptspeicher 10 in das Datenspeicherregister 16 gelesen werden, wird das am weitesten links stehende Bezeichnungsbit im Bezeichnungsschieberegister 34 in die Bezeichnungsbitposition 20 des Datenspeicherregisters 16 gesetzt. Wenn die Wörter 11 vom Datenspeicherregister 16 in den Hauptspeicher 10 übertragen werden, wird das Bezeichnungsbit 20 der UND-Schaltung 32 zugeleitet, an deren anderem Eingang das Speicherfreisignal liegt. Da das Speicherfreisignal aktiv ist, werden die Bezeichnungsbits 12 zusammen mit dem Wort 11 gespeichert. Wenn alle Bezeichnungsbits für ein bestimmtes Vierfachwort 14 im Hauptspeicher 10 gespeichert sind, wird das Bezeichnungsschieberegister 34 eine Position nach links verschoben, damit das nächste Bezeichnungsbit zusammen mit dem nächsten Vierfachwort 14 im Hauptspeicher gespeichert werden kann. Dieser Vorgang wird wiederholt, bis alle Worte 11 im Hauptspeicher 10 mit den zugehörigen Bezeichnungsbits 12 gespeichert sind.

**Patentansprüche**

1. Vorrichtung zum Bearbeiten von jeweils aus mehreren Zoneninformationen bestehenden Hinweisen in einem Datenverarbeitungssystem mit einem Hauptspeicher (10), der in adressierbare Zonen (11) eingeteilt ist, deren jede eine Bezeichnungsposition (12) umfasst, mit einem Datenspeicherregister (16), das mit dem Hauptspeicher verbunden ist und aus dem Speicher gelesene oder zu speichernde Daten samt in einer Bezeichnungsposition gespeicherten oder speichernden Bezeichnungsbits aufnehmen kann, und mit einem Bezeichnungsprüfregister (22) zur Aufnahme von Bezeichnungsbits von im Datenspeicherregister stehenden Daten, gekennzeichnet durch folgende Merkmale:

a) das Bezeichnungsprüfregister (22) ist zur sequentiellen Speicherung der Bezeichnungsbits der aufeinanderfolgend in das Datenspeicherregister eingegebenen Zoneninformationen ausgebildet;

b) mit den Stufen des Bezeichnungsprüfregisters ist eine Bezeichnungsauswerteschaltung (24) verbunden, um die im Bezeichnungsprüfregister enthaltenen Bezeichnungsbits logisch zu kombinieren;

c) der Bezeichnungsauswerteschaltung (24) ist eine Fehlerfeststellschaltung (26, 28) nachgeschaltet, die bei Zuführung eines die Prüfung einer Bezeichnung veranlassenden Signales ein Fehlersignal abgibt, wenn durch die Bezeichnungsauswerteschaltung nicht ein bestimmter Wert abgegeben wird.

2. Vorrichtung nach Anspruch 1, dadurch gekennzeichnet, dass mit dem Datenspeicherregister (16) und mit der Bezeichnungsauswerteschaltung (24) ein Bezeichnungsschieberegister (34) verbunden ist, in das Bezeichnungsbits übernommen werden können, um sie in das Datenspeicherreigster entweder einzeln jeweils in die Bezeichnungsbitposition oder als Sammelinformation zur Abspeicherung einzuschreiben.

3. Vorrichtung nach Anspruch 1 oder 2, dadurch gekennzeichnet, dass das Bezeichnungsprüfregister (22) als Schieberegister ausgebildet ist.

4. Vorrichtung nach Anspruch 1 oder 2, dadurch gekennzeichnet, dass die Bezeichnungsauswerteschaltung (24) als Äquivalenzschaltung ausgebildet ist, deren Eingänge mit den einzelnen Stufen des Bezeichnungsprüfregisters (22) verbunden sind.

5. Vorrichtung nach einem der vorhergehenden Ansprüche, dadurch gekennzeichnet, dass die adressierbaren Zonen je ein Datenwort umfassen.

## Revendications

1. Dispositif de traitement de pointeurs à indicateur comportant plusieurs segments d'information dans un système de traitement de données comprenant une mémoire principale (10) divisée en zones adressables (11) dont chacune comporte une position d'indicateur (12), un registre de données (16), connecté à la mémoire principale et qui peut recevoir des données reçues à partir de/ou à emmagasiner dans la mémoire, y compris les bits indicateurs emmagasinés, ou à emmagasiner, dans une position d'indicateur, ainsi qu'un registre de vérification d'indicateur (22) pour recevoir des bits d'indicateur à partir des données entrées dans ledit registre de données; ledit dispositif étant caractérisé en ce que:

a) ledit registre de vérification d'indicateur (22) est adapté pour l'emmagasinage séquentiel des bits indicateurs des segments d'information successivement entrés dans le registre de données;

b) un circuit d'évaluation d'indicateur (24) est connecté aux étages du registre de vérification d'indicateur pour combiner, de façon logique, les bits indicateur contenus dans ledit registre de vérification d'indicateur;

c) un circuit de détection d'erreurs (26, 28) connecté à la sortie dudit circuit d'évaluation d'indicateur (24) fournit lorsqu'il reçoit un signal demandant la vérification d'un indicateur, un signal d'erreur si ledit circuit d'évaluation d'indicateur n'a pas indiqué une valeur donnée.

2. Dispositif selon la revendication 1, caractérisé en ce qu'un registre à décalage d'indicateur (34) est connecté audit registre de données (16) et audit circuit d'évaluation d'indicateur (24), ledit registre à décalage pouvant recevoir des bits indicateurs pour les charger dans le registre de données soit individuellement dans la position d'indicateur soit sous forme d'informations accumulées.

3. Dispositif selon la revendication 1 ou 2, caractérisé en ce que ledit registre de vérification d'indicateur (22) est un registre à décalage.

4. Dispositif selon la revendication 1 ou 2, caractérisé en ce que ledit circuit d'évaluation d'indicateur (24) est un circuit d'équivalence dont les sorties sont connectées aux différents étages dudit registre de vérification d'indicateur (22).

5. Dispositif selon l'une quelconque des revendications précédentes, caractérisé en ce que lesdites zones adressables comprennent chacune un mot de données.

## Claims

1. Apparatus for handling tagged pointers consisting of multiple data items, in a data processing system comprising a main store (10) divided into addressable data item locations (11) each of which locations includes a tag position (12), the apparatus comprising a data register (16) which is connected to the main store and which can store data which has been read from the store or which is to be written into the store, such data including tag bits read from or to be written into tag positions and further comprising a tag check register (22) for receiving tag bits from data stored in said data register, characterized by the following features:

a) said tag check register (22) is designed for sequentially storing tag bits from data items sequentially transferred into said data register;

b) tag interpretation means (24) are connected to the stages of said tag check register for logically combining the tag bits contained in said tag bit check register;

c) error detection means (26, 28) are connected to the output of said tag interpretation means (24), which furnish in response to a signal inducing tag testing an error signal if said tag interpretation means does not furnish a predetermined value.

2. Apparatus in accordance with claim 1, characterized in that a tag shift register (34) is connected to said data register (16) and said tag interpretation means (24), into which tag bits can be transferred, for storing them in said data register either individually in the tag bit position, or as accumulated information.

3. Apparatus in accordance with claim 1 or 2, characterized in that said tag check register (22) is implemented as shift register.

4. Apparatus in accordance with claim 1 or 2, characterized in that said tag interpretation means (24) is implemented as equivalence circuit, the inputs of which are connected to the individual stages of said tag check register (22).

5. Apparatus in accordance with one of the preceding claims, characterized in that said adressable data item locations each comprise one data word.

HAUPTSPEICHER

STEUER – WORT

VON ANDEREN REGISTERN

BEZ. STEUER-
SCHALTUNG

SA REG.    SB REG.

BEZ.DATEN   BEZ.STEUER

ALU

ZU ANDEREN REGISTERN

FIG. 2

FIG-3